# EUROPEAN PATENT APPLICATION

(11) **EP 1 699 177 A1**
(43) Date of publication of application: **06.09.2006**
(21) Application number: 06110653.0
(22) Date of filing: 03.03.2006
(51) Int. Cl.: H04L 12/28, H04B 7/04

(54) **Link adaptation for high throughput multiple antenna WLAN system**

(30) Priority: 03.03.2005 US 71692
(71) Applicant: TEXAS INSTRUMENTS LIMITED, Northampton Business Park, Northampton NN4 7YL (GB)
(72) Inventor: Airy, Manish Texas Instruments Incorporated, Austin 78750, TX 78750 (US); Xiaolin, Lu Texas Instruments Incorporated, Plano 75024 TX Texas (US)
(74) Representative: Holt, Michael

(57) **Abstract**

A wireless device 148 that performs link adaptation is disclosed. The wireless device 148 comprises at least two antennas and a network interface logic operable to select transmission parameters based on a packet error rate 154 and on at least one signal-to-noise ratio 152 of a radio communication channel.

## Description

The present disclosure is directed to communication systems, and more particularly, but not by way of limitation, to link adaptation for high throughput multiple antenna wireless local area network systems.

### BACKGROUND

Communication systems desirably transmit messages at maximum throughput rates. At the same time, a receiver may find messages transmitted at higher throughput rates to be more difficult to demodulate, and thus a transmitter may adjust its transmission rate accordingly. In some communication systems the transmitted messages may comprise data packets. Data packets may include a header portion which contains information about the message, for example the destination of the message, the source of the message, and the rate at which the message is transmitted. The data packets also contain a data portion which is the main content of the message. Because typically the data portion of the data packet bears the content of the communication, the header portion of the data packet may be considered overhead that is desirably minimized in order to increase the throughput of useful content in the communication system.

A signal-to-noise ratio of the messages and a packet error rate may provide indications of the ability of a receiver to demodulate messages. A high signal-to-noise ratio may be associated with a high probability of successfully demodulating the messages; a low signal-to-noise ratio may be associated with a low probability of successfully demodulating the messages. Similarly, a high packet error rate indicates that a high proportion of packets are not successfully demodulated and a low packet error rate indicates that a low proportion of packets are not successfully demodulated.

### SUMMARY

A wireless device that performs link adaptation is disclosed. The wireless device comprises at least two antennas and a network interface logic operable to select transmission parameters based on a packet error rate and on at least one signal-to-noise ratio of a radio communication channel.

A wireless device comprising at least one antenna, a first component to determine a packet error rate and a signal-to-noise ratio, and a second component to select one or more transmission parameters for transmitting a wireless signal via the at least one antenna is also disclosed.

A method for performing link adaptation in wireless communication is also disclosed. The method comprises determining at least a first signal-to-noise ratio of a radio communication channel, determining a packet error rate, selecting at least one wireless transmission parameter based on at least the first signal-to-noise ratio and the packet error rate, and wireless transmitting using the selected wireless transmission parameter.

These and other features and advantages will be more clearly understood from the following detailed description taken in conjunction with the accompanying drawings and claims.

### BRIEF DESCRIPTION OF THE DRAWINGS

FIG. 1 depicts an exemplary wireless piconet for implementing the embodiments of the disclosure.
FIG. 2 is a diagram of two devices in wireless communication according to an embodiment.
FIG. 3 is a block diagram of link adapter according to an embodiment.
FIG. 4 is a flow diagram illustrating a method of performing link adaptation according to an embodiment.

### DETAILED DESCRIPTION OF THE EMBODIMENTS

For maximum wireless communication data throughput, it may not be desirable to transmit with a very low packet error rate. Errored packets may be resent in many cases, so error free packet transmission is not necessary for error free communication. The environment of the wireless communication channel may change rapidly over time. Maintaining a very low packet error rate with a fixed data transmission rate may result in an excessively low transmission rate, relative to the channel throughput capacity, which may waste communication bandwidth during good channel conditions. The present disclosure provides a wireless transmitter that adopts data transmission rates based on the signal-to-noise ratios of the communication channel determined over relatively short time periods and that employs the packet error rate determined over relatively long time periods as a gross correction factor when the packet error rate differs excessively from a desirable or target packet error rate.

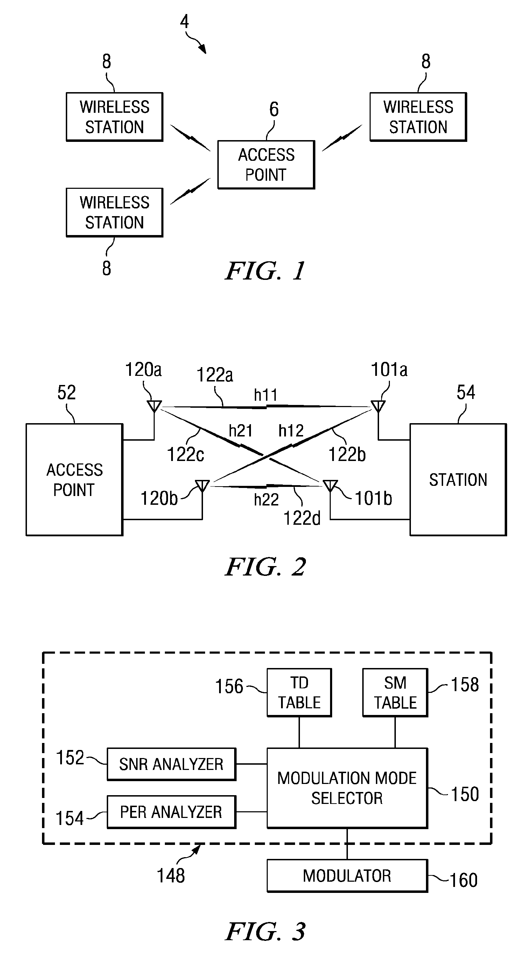

In FIG. 1, a communication network 4 is illustrated that is implemented in accordance with one embodiment. As shown, the network 4 comprises at least one access point 6 configured to wirelessly communicate with at least one wireless station 8. Three wireless stations 8 are depicted in the exemplary network 4, but in other embodiments either more or fewer wireless stations 8 may communicate with the access point 6. The access point 6 may include a wired connection (not shown) to a server or other suitable network device (also not shown) whereby the wireless network 4 is connected to a wired network such as the public data network, for example the Internet (not shown). Additional access points 6 may be included as desired thereby permitting the wireless stations 8 to wirelessly access the wired network via any of a plurality of access points 6. The wireless stations 8 may be desktop computers, notebook computers, computer-related equipment in general, personal data assistants, or any other type of device or equipment to be used in a communication network. In an embodiment, the communication network 4 conforms to the IEEE-802.11n standard.

In FIG. 2, a block diagram shows an access point 52 in wireless communication with a wireless station 54. The wireless station 54 includes two antennas 101 - a first antenna 101a and a second antenna 101b. The access point 52 includes two antennas 120 - a third antenna 120a and a fourth antenna 120b. Although shown with two antennas, the wireless station 54 and the access point 52 may have one or more antennas. Four wireless communication channels 122 - a first h11 wireless channel 122a from the first transmit antenna 120a to the first receive antenna 101a, a second h12 wireless channel 122b from the second transmit antenna 120b to the first receive antenna 101a, a third h21 wireless channel 122c from the first transmit antenna 120a to the second receive antenna 101b, and a fourth h22 wireless channel 122d from the second transmit antenna 120b to the second receive antenna 101b - are established between the wireless station 54 and the access point 52. The four wireless channels 122 are bidirectional when considered in the context of a communication system. Two independent streams of information may be transmitted over the four wireless channels - a first wireless information stream and a second wireless information stream - which may be termed spatial multiplexing mode. Alternately, the same stream of information may be transmitted by each antenna - which may be termed transmit diversity mode - to increase the probability that the information will be correctly demodulated at a receiver.

In FIG. 3, an exemplary functional architecture for a link adapter 148 of a wireless transceiver according to an embodiment is depicted. The link adapter component 148 includes a modulation mode selector component 150 in communication with a signal-to-noise ratio (SNR) analyzer component 152 and a packet error rate (PER) analyzer component 154. The SNR analyzer component 152 analyzes the communication channel between a transmitter and a receiver, for example between one of the wireless stations 8 and the access point 6, and provides a plurality of SNR metrics to the modulation mode selector component 150. The PER analyzer component 154 analyzes communications between a transmitter and a receiver, for example between one of the wireless stations 8 and the access point 6, and provides a PER metric to the modulation mode selector component 150.

The link adapter 148 also includes a transmit diversity data store 156 and a spatial multiplexing data store 158. The modulation mode selector component 150 uses the SNR metrics and the PER metric to look up a desirable transmit diversity modulation mode in the transmit diversity data store and to look up a desirable spatial multiplexing modulation mode in the spatial multiplexing data store 158. The modulation mode selector component 150 configures or commands a modulator component 160 with transmission parameters such as a message packet size, a transmission rate, and a diversity mode to employ in transmitting messages. Both the link adapter 148 and the modulator component 160 may be a part of a transmitter (not shown) in the wireless station 8 and/or the access point 6.

The link adapter 148 may be embodied in software modules which execute on the wireless station 8 or on the access point 6. Alternately, the link adapter 148 may be embodied in circuits in the wireless station 8 or on the access point 6, for example application specific integrated circuits (ASICs), field programmable gate arrays (FPGAs), complex programmable logic devices (CPLDs), portions of digital signal processors (DSPs), portions of microprocessors, portions of microcontrollers, or other computational devices known to those skilled in the art. The link adapter 148 may be combined with other components of the access point 6 or the wireless station 8 as a "system on a chip" including the antennas 101, the modulator component 160, and other components of a communications transmitter or a transceiver (a combined transmitter and receiver). The link adapter 148 may be considered to provide at least a portion of a network interface of the wireless station 8 and the access point 6.

In a multiple input multiple output (MIMO) wireless environment, several different SNR metrics may be calculated by the SNR analyzer component 152. In one embodiment, the SNR analyzer component 152 determines six SNR metrics. A first-order SNR may be determined as the mean of the received radio power. A frequency second-order SNR may be determined as the variance in the frequency domain in the received signal. A time second-order SNR may be determined as the variance in the time domain in the received signal. Because the antennas 101 are used differently in the transmit diversity and the spatial multiplexing modes of transmission, the SNR analyzer component 152 determines the three SNR metrics for both transmit diversity and spatial multiplexing modes, for a total of six independent SNR metrics. The SNR analyzer component 152 may calculate the SNR metrics for every received packet, for example based on a preamble that precedes a packet. The six SNR metrics determined by the SNR analyzer component 152 may be referred to as: 1) a first-order SNR of the transmit diversity mode of transmission, 2) a frequency second-order SNR of the transmit diversity mode of transmission, 3) a time second-order SNR of the transmit diversity mode of transmission, 4) a first-order SNR of the spatial multiplexing mode of transmission, 5) a frequency second-order SNR of the spatial multiplexing mode of transmission, and 6) a time second-order SNR of the spatial multiplexing mode of transmission. The SNR analyzer component 152 determines the SNR metrics over a relatively short period of time, the period of time ranging from 50 milliseconds in length to 40000 milliseconds (40 seconds) and ranging more preferably over 200 milliseconds to 2000 milliseconds. In an embodiment, the time duration of SNR analysis may be programmable and/or configurable.

In an embodiment, the SNR analyzer component 152 determines the SNR metrics following channel equalization. Channel equalization refers to the signal processing at the transceiver that enables reliable detection of the wirelessly transmitted information. In an embodiment, the SNR metrics mentioned above are calculated post-equalization and the matrix structure of the MIMO channel is abstracted post-equalization. For MIMO systems which attempt to maximize diversity or robustness to channel fading, the channel equalizer takes the form of Maximum Ratio Combining equalization. For MIMO systems which attempt to maximize the data rate of transmission via spatial multiplexing the channel equalizer takes the form of Minimum Mean Squared Error equalization. For more details on these equalizer designs, refer "Introduction to Space-Time Communications",
A. Paulraj, R. Nabar and D.J. Gore, Cambridge University Press, 2003.

The PER analyzer component 154 determines or calculates the PER metric as a weighted running average. The PER analyzer component 154 determines the PER metric over a relatively long period of time, the period of time ranging from 0.5 seconds to 40000 seconds and ranging more preferably over 5 seconds to 100 seconds. The period of time employed by the PER analyzer component 154 for determining the PER metric is longer than the period of time employed by the SNR analyzer component 152 for determining the SNR metrics. The PER analyzer component 154 determines the PER metric on a per access point 52-wireless station 54 link basis.

The modulation mode selector 150 employs the SNR metrics determined by the SNR analyzer component 152 and the PER metric determined by the PER analyzer component to determine a desirable transmit diversity mode transmission rate and to determine a desirable spatial multiplexing mode transmission rate. The determination of a desirable transmission rate is accomplished using look up tables in the transmit diversity data store 156 and the spatial multiplexing data store 158, employing what may be termed a table look-up. As is known to one skilled in the art, a table look-up maps a set of input data to one or more output values, the mapping being defined by the data contained in the table. The table look-up approach allows the mapping stored in the table or tables to be more readily modified than computer programs or codes.

The mapping in the transmit diversity data store 156 and in the spatial multiplexing data store 158 selects the highest transmission rate for each MIMO mode that the present SNR metrics can reliably support. The desirable transmit diversity transmission rate and the desirable spatial multiplexing transmission rate are each associated with minimum SNRs. Between the two transmission rates, the desirable transmit diversity transmission rate and the desirable spatial multiplexing transmission rate, the transmission rate having the lower minimum SNR may be selected for transmission.

A longer packet size may require higher SNR margins because it takes longer to transmit a longer packet, thus exposing the transmission to greater risk that the channel environment may change adversely during the transmission. In an embodiment, packet size is accommodated by the look-up operation by requiring a higher SNR for longer packets.

The PER metric is used as a gross correction factor on the transmission rate selection algorithm. If the PER metric is too high, the look-up operation requires higher SNR metrics for each transmission rate. It is acceptable, even preferable, that the PER metric not be zero. An error rate safety interval (ERSI) is defined around a target PER metric. If the PER metric lies within the ERSI, no accommodation of the PER metric is made. If the PER metric lies above the ERSI, then the transmission rate selection look-up algorithm requires higher SNR metrics for each transmission rate, thereby influencing the transmission rate selections. If the PER metric lies below the ERSI, then the transmission rate selection look-up algorithm requires lower SNR metrics for each transmission rate, thereby influencing the transmission rate selections. In an embodiment, the PER target may be 1% and the ERSI window may extend from 5% to 0.02%. In other embodiments, other PER targets and other ERSI windows may be employed.

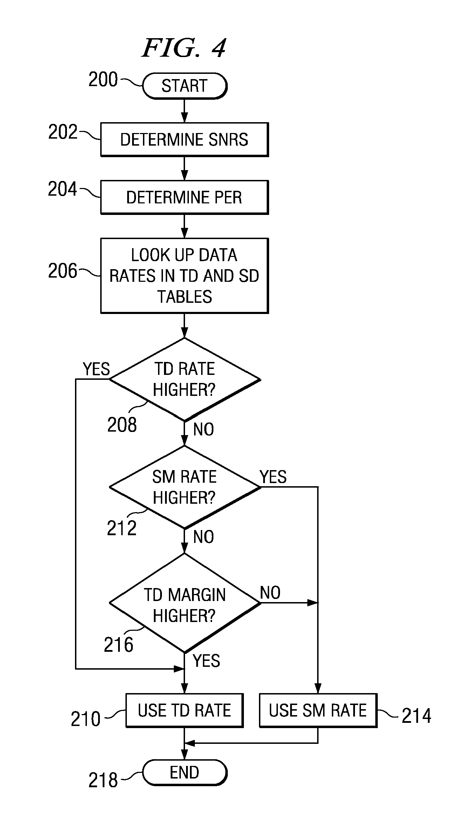

In FIG. 4, an exemplary method of selecting a transmission rate is depicted. The method begins at block 200 and proceeds to block 202 where the SNRs for the subject communication channel are determined. The SNRs may include the first-order SNR of the transmit diversity mode of transmission, the frequency second-order SNR of the transmit diversity mode of transmission, the time second-order SNR of the transmit diversity mode of transmission, the first-order SNR of the spatial multiplexing mode of transmission, the frequency second-order SNR of the spatial multiplexing mode of transmission, and the time second-order SNR of the spatial multiplexing mode of transmission. The SNRs may be averaged over a time period.

The method proceeds to block 204 where the PER is determined. The PER may be looked up or read from memory in some executions of the exemplary method of selecting a transmission rate and determined, for example by calculation, on other executions of the exemplary method. For example, the PER may be determined by calculation on the first execution of the exemplary method and on every tenth execution thereafter for the duration of a particular link between the wireless station 8 and the access point 6.

The method proceeds to block 206 where the SNRs and PER are used to determine the desirable transmit diversity mode data rate and the desirable spatial diversity data rate. The method may employ a triple point look-up in the transmit diversity data store 156 and a triple point look-up in the spatial multiplexing data store 158 to identify the desirable data rates and an SNR margin associated with each desirable data rate. The SNR margin is the difference between the SNR required for the desirable data rate and the SNRs determined in block 200. For example, a 24 Mbps transmit diversity rate may require a 12 dB first order SNR, a 36 Mbps transmit diversity rate may require a 15 dB first order SNR, the first order SNR determined in block 200 may be 14 dB. In this example, the 24 Mbps transmit diversity rate would be identified as the desirable transmit diversity mode rate with a SNR margin of 2 dB, because the first order SNR determined in block 200, 14 dB, can provide the SNR required for the 24 Mbps transmit diversity rate but not for the higher transmit diversity mode rates.

The method proceeds to block 208 where if the desired transmit diversity rate is higher than the spatial multiplexing rate, the method proceeds to block 210 where the desired transmit diversity rate is selected. The method proceeds to block 218 and exits.

In block 208, if the desired transmit diversity rate is not higher than the spatial multiplexing rate, the method proceeds to block 212 where if the desired spatial multiplexing rate is higher than the desired transmit diversity rate, the method proceeds to block 214 where the desired spatial multiplexing rate is selected. The method proceeds to block 218 and exits.

In block 212, if the desired spatial diversity rate is not higher than the desired transmit diversity rate, the method proceeds to block 216. In this case, both rates are equal and the decision is based on the SNR margin of the two rates. In block 216, if the SNR margin of the desired transmit diversity rate is higher than the SNR margin of the desired spatial multiplexing rate, the method proceeds to block 210 where the desired transmit diversity rate is selected, otherwise the method proceeds to block 214 where the desired spatial multiplexing rate is selected. The method proceeds to block 218 and exits.

In block 206, if the PER is too high, the SNRs determined in block 202 may be offset lower to drive the method to select a more robust rate with a lower data rate and hence bring the PER down. If the PER is too low, the SNRs determined in block 202 may be offset higher to drive the method to select a less robust rate with a higher data rate. The offset when the PER is too high is preferably more aggressive than the offset when the PER is too low.

The transmission packet size may be used by the method to offset the SNRs determined in block 202. Less SNR may be required to reliably transmit smaller sized packets. Thus, when smaller transmission packets are employed, the SNRs determined in block 202 may be offset higher to drive the method to select a higher data rate. In an embodiment, no SNR offset is provided for packet sizes larger than 4095. For packet sizes in the range 1024 byes to 4095 bytes, 1 dB SNR offset is provided. For packet sizes in the range 512 to 1023 bytes, 2 dB SNR offset is provided. For packet sizes of 511 bytes or less, a 3 dB SNR offset is provided.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein, but may be modified within the scope of the appended claims along with their full scope of equivalents. For example, the various elements or components may be combined or integrated in another system or certain features may be omitted, or not implemented.

Those skilled in the art to which the invention relates will appreciate that the foregoing are merely examples of implementations of the invention, and the various additions, deletions, substitutions and other modifications may be made to those examples, without departing from the scope of the claimed invention.

## Claims

1. A method for wireless communication, comprising:
determining at least a first signal-to-noise ratio of a radio communication channel;
determining a packet error rate;
selecting one or more wireless transmission parameters based on at least the first signal-to-noise ratio and the packet error rate; and
wirelessly transmitting using the selected wireless transmission parameter.

2. The method of Claim 1, wherein the selecting one or more wireless transmission parameters is further based on a packet size and the selecting includes:
selecting one of a plurality of modulation modes;
selecting a multiple input multiple output mode from the group consisting of a transmit diversity mode and a spatial multiplexing mode; and
selecting a packet size.

3. The method of Claim 1 or 2, wherein the determining at least a first signal-to-noise ratio comprises:
determining a first-order signal-to-noise ratio of a transmit diversity mode of transmission;
determining a frequency second-order signal-to-noise ratio of the transmit diversity mode of transmission;
determining a time second-order signal-to-noise ratio of the transmit diversity mode of transmission;
determining a first order signal-to-noise ratio of a signal diversity mode of transmission;
determining a frequency second-order signal-to-noise ratio of the signal diversity mode of transmission; and
determining a time second-order signal-to-noise ratio of the signal diversity mode of transmission.

4. The method of Claim 1,2 or 3, wherein the selecting one or more wireless transmission parameters based on at least the first signal-to-noise ratio and on the packet error rate includes:
looking up a transmit diversity modulation mode in a first table based on the first-order signal-to-noise ratio of the transmit diversity mode, the frequency second-order signal-to-noise ratio of the transmit diversity mode, and the time second-order signal-to-noise ratio of the transmit diversity mode;
looking up a spatial multiplexing modulation mode in a second table based on the first-order signal-to-noise ratio of the spatial multiplexing mode, the frequency second-order signal-to-noise ratio of the spatial multiplexing mode, and the time second-order signal-to-noise ratio of the spatial multiplexing mode; and
selecting a modulation mode having the greater transmission rate from the looked-up transmit diversity modulation mode and the looked-up spatial multiplexing modulation mode.

5. The method of Claim 4, wherein the selecting one or more wireless transmission parameters based on at least the first signal-to-noise ratio and on the packet error rate includes:
determining a correction based on the packet error rate versus a range of packet error rate values; and
adding the correction
to the first order signal-to-noise ratio of the transmit diversity mode of transmission,
to the frequency second-order signal-to-noise ratio of the transmit diversity mode of transmission,
to the time second-order signal-to-noise ratio of the transmit diversity mode of transmission,
to the first-order signal-to-noise ratio of the spatial multiplexing mode of transmission,
to the frequency second-order signal-to-noise ratio of the spatial multiplexing mode of transmission, and
to the time second-order signal-to-noise ratio of the spatial multiplexing mode of transmission
before looking up the transmit diversity modulation mode in the first table and before looking up the spatial multiplexing modulation mode in the second table.

6. The method of Claim 5, wherein the correction is zero when the packet error rate falls within an acceptable packet error rate range.

7. A wireless device, comprising:
at least two antennas; and
a network interface logic operable to select transmission parameters based on a packet error rate and on at least one signal-to-noise ratio of a radio communication channel.

8. The wireless device of Claim 7, wherein the network interface logic selects transmission parameters based at least in part on a first signal-to-noise ratio determined for a transmit diversity mode of transmission and on a second signal-to-noise ratio determined for a spatial multiplexing mode of transmission.

9. The wireless device of Claim 7 or 8, wherein the network interface logic selects transmission parameters based at least in part on:
a first-order signal-to-noise ratio of a transmit diversity mode of transmission;
a frequency second-order signal-to-noise ratio of the transmit diversity mode of transmission;
a time second-order signal-to-noise ratio of the transmit diversity mode of transmission;
a first-order signal-to-noise ratio of a spatial multiplexing mode of transmission;
a frequency second-order signal-to-noise ratio of the spatial multiplexing mode of transmission; and
a time second-order signal-to-noise ratio of the spatial multiplexing mode of transmission.

10. The wireless device of Claim 1, wherein the at least one signal-to-noise ratio is determined as an average over a first period of time, the packet error rate is determined over a second period of time, and wherein the first period of time is shorter than the second period of time.

11. The wireless device of Claim 10, wherein the first period of time is between 50 and 500 times less than the second period of time.

12. A wireless device, comprising:
at least one antenna;
a signal-to-noise ratio analyzer operable to determine a signal-to-noise ratio;
a packet error rate analyzer operable to determine a packet error rate; and
a modulation mode selector operable to select one or more transmission parameters for transmitting a wireless signal via at least one of the antennas.
